Europäisches Patentamt

European Patent Office

Office européen des brevets

(19)

(11) Publication number: **0 030 050**
**B1**

(12) **EUROPEAN PATENT SPECIFICATION**

(45) Date of publication of patent specification: **14.03.84**

(51) Int. Cl.³: **C 08 F 299/04**

(21) Application number: **80201076.9**

(22) Date of filing: **12.11.80**

(54) Process for hardening unsaturated polyesters.

(30) Priority: **17.11.79 NL 7908410**

(43) Date of publication of application:
**10.06.81 Bulletin 81/23**

(45) Publication of the grant of the patent:
**14.03.84 Bulletin 84/11**

(84) Designated Contracting States:
**BE DE FR GB IT NL SE**

(56) References cited:
**DE - A - 1 769 796**
**US - A - 3 584 076**

(73) Proprietor: SYNRES INTERNATIONAAL B.V.
Slachthuisweg 30
NL-3151 XN Hoek van Holland (NL)

(72) Inventor: Froehling, Peter Ernst
Hasselhofstraat 3
NL-6136 BL Sittard (NL)
Inventor: Muskens, Bernardus Johanna
Gansbeek 64
NL-6166 JB Geleen (NL)

(74) Representative: Leherte, Georges Maurice Lucien
Marie et al,
Octrooibureau DSM P.O.Box 9
NL-6160 MA Geleen (NL)

**0 030 050**

### Process of hardening unsaturated polyesters

The invention relates to a process of hardening, at room temperature or slightly higher temperature, an unsaturated polyester dissolved in one or more copolymerizable monomers.

It is known to use styrene as the monomer in such compositions. Some disadvantages involved in this are the emission of the relatively volatile system during processing, and the strong smoke development upon combustion of the hardened polyesters. Therefore, it is desirable to replace the styrene monomer by a monomer or a mixture of monomers having a lower vapour pressure, which, moreover, give(s) off less smoke upon combustion of the hardened product. Suitable monomers seem to be the vinyl esters with a low vapour pressure. However, the applicant has found that the compositions containing a vinyl ester are difficult to harden cold by means of the usual hardening systems, which consist of an organic peroxide, a metal compound soluble in the composition to be hardened, and, optionally, a co-accelerator.

The object of the invention is to provide a hardening system that is suitable for the cold hardening of compositions based on an unsaturated polyester and a vinyl ester.

According to the invention, the cold hardening of an unsaturated polyester dissolved in one or more copolymerizable monomers is effected by means of a system consisting of an organic peroxide, a metal compound soluble in the composition, and a co-accelerator, which system—if the monomer used comprises at least one vinyl ester—is composed of a ketone peroxide, a vanadium compound, and a enolizable $\beta$-diketo compound.

The cold hardening of compositions containing a vinyl ester has been found to succeed well if the process according to the invention is applied. The conversion of the monomer is high, and the percentage of extractible polyester in the hardened product is low. The use of an enolisable diketone as accelerator in polyester curing systems is not in itself novel, see for instance US—A—3.584.076. Likewise, vanadium compounds have been used before as the metallic component in curing systems, see DE—A—1 769 796. The prior art does not disclose or suggest that the problem encountered in curing compositions containing a vinyl ester can be surmounted by using the very specific curing system according to the present invention. Unexpectedly, the components in this system are not interchangeable with other components which according to prior art should be functionally equivalent.

The organic peroxide used is a ketone peroxide. Examples in point are methylethylketone peroxide, methylisobutylketoneperoxide, cyclohexanoneperoxide. If other peroxides are used, e.g. peresters or hydroperoxides, cold hardening is not effected or is much slower. The peroxide can be used in an amount of between 0.5 and 10.0% by weight, related to the polyester plus the monomer or monomers. Preferably, use is made of between 1.0 and 5.0% wt. of peroxide.

Eligible vanadium compounds are those salts and complexes of vanadium which are soluble in the composition to be hardened. Examples in point are such complexes and carboxylic salts as vanadylacetylacetonate, vanadylbenzoylacetonate, vanadyloctoate, vanadylcaproate, vanadyllaurate, and vanadylnaphthenate. Highly suitable are the vanadyl salts of $C_{2-20}$ carboxylic acids and vanadyl complexes with diketo compounds. The vanadium compound can be added in an amount corresponding to 0.01—1.0 mmole of vanadium (elemental) per 100 grams of polyester plus monomer or monomers. In general, the best results are obtained with 0.01 to 0.05 mmole of vanadium per 100 g of hardenable composition.

The co-accelerator used is an enolizable $\beta$-keto compound. Compounds of this type are generally known, and have been mentioned before as co-accelerators in combination with cobalt compounds. As diketo compounds may be mentioned aliphatic, cycloaliphatic and aromatic compounds, such as acetylacetone, benzoylacetone, acetylcyclohexanone, by the side of $\beta$-ketocarboxylic esters such as acetylacetic acid ethyl ester and amides of $\beta$-ketocarboxylic acids. The diketo compounds can be used in an amount of between 5 and 250 moles per mole of vanadium (elemental), by preference between 25 and 150 moles per mole of vanadium.

The composition to be hardened consists to 40—70% wt. of unsaturated polyester and 30—60% wt. of monomer or monomer mixture copolymerizable with the polyester. The monomer used is a vinyl ester of an aliphatic linear or branched carboxylic acid or of an aromatic carboxylic acid, which ester preferably has a boiling point of at least 150°C. Examples of suitable vinyl esters are vinylcaproate, vinyllaurate, vinylpivalate, vinylbenzoate, vinylchloracetate, and in particular the esters of the synthetic $C_{8-14}$ carboxylic acids branched in the $\alpha$-position, such as vinylversatate. If a mixture of monomers is used, it preferably consists to at least 50% by weight of the abovementioned vinyl ester(s). Monomers that may be mixed with the vinyl esters include acrylates and methacrylates, dialkylfumarates, allyl esters, vinyl ethers, N-vinyl lactams, and styrene. Cross-linking monomers, such as, for instance, triallylcyanurate, ethyleneglycoldiacrylate, divinylstyrene or diallylphthalate, can also be used.

The unsaturated polyester is the usual condensation product formed by reaction of at least one $\alpha$-unsaturated dicarboxylic acid, and optionally, one or more aliphatic or aromatic dicarboxylic acids, with an aliphatic diol, optionally mixed with a minor amount of a compound containing three or more hydroxyl groups. Examples of the unsaturated dicarboxylic acids are fumaric acid and maleic acid, and examples of the non-unsaturated dicarboxylic acids are adipic acid, sebacic acid, terephthalic acid,

2

isophthalic acid, tetrahydrophthalic acid, and phthalic acid. Examples of hydroxyl compounds are ethyleneglycol, diethyleneglycol, butanediol, hexanediol, neopentylglycol, 4,4'-isopropylidenebiscyclohexanol, and trimethylolpropane. Optionally, also halogenated compounds, such as tetrabromophthalic acid, may be included.

It seems possible to improve the solubility of the polyester in vinyl esters by applying as a reaction component a small quantity of a monofunctional alcohol of low vapour pressure, for instance octanol-2, decanol, 2-ethylhexanol, tetradecanol, or cyclohexanol. Optionally, use may be made also of a small quantity of a monofunctional carboxylic acid, such as benzoic acid, stearic acid, or 2-ethylhexanoic acid. The degree of unsaturation of the polyester is preferably between 200 and 600 milliequivalents unsaturation per 100 grams of polyester. The acidity may be between 0 and 150 meq. COOH per 100 g of polyester, preferably between 5 and 75 meq.

The composition to be hardened may further contain normally-used additives, such as fillers, reinforcing agents, in particular glass fibre, pigments, thickeners, stabilizers, antioxidants, antishrink additives, flame-extinguishing additives, etc.

The applicant has further found that addition of acids, preferably of non-complexing carboxylic acids, to the composition to be hardened will accelerate the hardening process. The quantity in which these are used may be up to 50 meq. of COOH per 100 g of polyester.

Suitable acids include aliphatic $C_{2-20}$ monocarboxylic acids and their halogenated derivatives, and their halogenated derivatives, saturated or unsaturated $C_{4-10}$ dicarboxylic acids and their monoesters with $C_{1-12}$ alcohols, olefinically unsaturated $C_{3-10}$ monocarboxylic acids and cycloaliphatic or aromatic $C_{7-15}$ monocarboxylic and dicarboxylic acids. Examples of suitable acids include acetic acid, propionic acid, caproic acid, trichloro acetic acid, adipic acid, maleic acid, fumaric acid, monobutylmaleate, monoethylfumarate, benzoic acid and monooctylphthalate.

The curing system used in the process described hereinbefore is susceptible to oxygen inhibition. This oxygen inhibition can be countered by known methods such as covering the surface of the composition which is to be cured with e.g. polyesterfilm, carrying out the curing in a closed mould and/or under an inert gas blanket, or adding a small amount of paraffin to the composition. Where the oxygen inhibition is a drawback, the curing system according to the invention may be modified by incorporating therein a small amount of a cobalt-compound and a non-complexing carboxylic acid in addition to the vanadium compound and the enolisable $\beta$-diketo compound. The incorporation of a cobalt-compound alone in the curing system used according to the invention has a negative effect, since it retards curing. By incorporating both a cobalt-compound and a non-complexing acid however a complete hardening can be obtained in a short time with little or no oxygen inhibition.

The cobalt compound may be used in an amount of between 5 and 150 weight % based on the vanadium compound (both calculated as elements). Most satisfactory results are obtained by using 10 to 100% by weight, and preferably 15 to 75% by weight of cobalt (elemental) based on vanadium (elemental). As cobalt compounds one may use salts and complexes which are soluble in the unsaturated polyester composition, as are conventionally used for the curing of styrene containing compositions. Examples comprise cobaltnaphthenate, cobalt-octoate, cobalt hexanoate and cobalt acetylacetonate.

The carboxylic acids disclosed above may be used in combination with the cobalt compound. The acid is used in an effective amount not exceeding 50 mq COOH per 100 g of polyester and in almost all cases less than 25 mq COOH/100 g polyester. The best results are obtained by using an amount of acid corresponding to 0,5 to 10 mq COOH per 100 g polyester.

The addition of the components of the hardening system to the composition to be hardened, and the hardening, can be effected in the way known for other hardening systems. By 'cold hardening' is here to be understood hardening at room temperature or slightly above, between about 15 and 35°C. The use of the systems according to the invention for hardening at higher temperatures is not excluded, however.

It should be remarked that the use of enolizable diketo compounds as co-accelerators is essential to the cold hardening of compositions containing vinyl ester in the presence of vanadium compound. The use of known other co-accelerators, such as phosphines, organophosphates, phosphites, amino compounds and sulphinates, has been found not to accelerate the hardening of the compositions described above, but, on the contrary, to have a retarding effect. The use of a mixture of cobalt and vanadiumcompounds has either no effect or a retarding effect.

The invention will be elucidated by means of the following examples. The hardening rate was determined by determining the gel time according to ASTM standard D 2471. To this end 25 grams of polyester plus monomer (hereinafter to be referred to as 'resin') is weighed out. At room temperature, the accelerator and the co-accelerator (promoter) are then admixed, in that order. Thereafter the initiator is admixed. From this moment the time and the solution temperature are noted the temperature by means of a bimetallic thermometer. The 'gel time' is the time elapsing between the addition of the initiator and the moment gel particles can be drawn out of the resin. The polymerization makes the temperature of the mixture go up. The maximum temperature reached is the 'peak temperature', and the time needed to reach it the peak 'peak time'.

In the examples below, the resins always contain 140 ppm of hydroquinone.

3

**O 030 050**

Example I

An unsaturated polyester was prepared by subjecting, in the usual manner, the following components to a polycondensation reaction: 415 parts of maleic anhydride, 419 parts of phthalic anhydride, 774 parts of neopentylglycol, 159 parts of n-tetradecanol. The calculated unsaturation content was 0.268 moles per 100 grams; the amount of free carboxyl groups was 0.36 meq. per gram.

Sixty parts of polyester were dissolved in forty parts of vinylversatate-10. For the measurement of the gel time, first a metal compound, and in two cases a promoter, was added to 25 g of the resin, and next 1 ml of a 50% solution of methylethylketoneperoxide in dimethylphthalate was added. The results are shown in the following table.

TABLE 1

| experiment | accelerator | promoter | gel time | peak time | peak temp. |
|---|---|---|---|---|---|
| 1* | 0.25 ml Co[a] | — | >24 h | — | — |
| 2* | 0.25 ml Co[a] | 0.5 ml acetylacetone | >24 h | — | — |
| 3* | 3 ml V[b] | — | >24 h | — | — |
| 4 | 3 ml V[b] | 0.5 ml acetylacetone | 14 min. | 17 min. | 130°C |

[a]cobaltoctoate in dioctylphthalate: the soln. contains 1% wt. Co.
[b]vanadylacetylacetonate in dimethylphthalate; the soln. contains 0.1% wt. V.
*)not according to the invention.

Example II

The hardening of the resin of Example I was tested by means of various peroxides, in combination with vanadylacetylacetonate and acetylacetone. To 25 g of resin an addition of 3 ml 0.1% V solution (as in Example I) and 0.5 ml acetylacetone was made.

After addition of 1 ml of initiator (50% soln. in dimethylphthalate) the gel time was measured. The results were as shown below:

TABLE 2

| expt. | peroxide | gel time | peak time | peak temp. |
|---|---|---|---|---|
| 4 | methylethylketoneperoxide | 14 min. | 17 min. | 130°C |
| 5* | cumenehydroperoxide | >12 h | — | — |
| 6* | t-butylperoctoate | >12 h | — | — |
| 7* | t-butylperbenzoate | >12 h | — | — |
| 8* | t-butylperpivalate | 50 min. | —[a] | —[a] |

*)not according to the invention.
[a]gelation does not occur, but polymerization is very slow, and not attended with a temperature rise.

Example III

An unsaturated polyester was prepared by polycondensation (with addition of 2.8 parts of dibutyltinoxide) of 433 parts of maleic anhydride, 571 parts of dimethylterephthalate, 764 parts of neopentylglycol, and 122 parts of n-decanol. The carboxyl content of the polyester was 0.07 meq. per gram. A resin consisting of 60 parts of the polyester and 40 parts of vinylversatate-10 was subjected to a series of gel time measurements with various peroxides. To this end, the following additions were successively made to 25 grams of the resin: 1 ml of a solution of vanadylacetylacetonate containing 0.3% vanadium, 0.5 ml of acetylacetone, and 1 ml of peroxide solution.

The results are shown in Table 3.

TABLE 3

| expt. | peroxide | gel time | peak time | peak temp. |
|---|---|---|---|---|
| 9 | methylethylketoneperoxide[a] | 12 min. | 14 min. | 140°C |
| 10 | cyclohexanoneperoxide[a] | 20 min. | 23 min. | 117°C |
| 11 | methylisobutylketoneperoxide[b] | 12 min. | 14 min. | 142°C |
| 12* | 1,1-ditert.butylperoxy-3,3,5-tri-methylcyclohexane[c] | 12 h. | — | — |

[a]50% soln. in dimethylphthalate.    [c]50% soln. in dibutylphthalate.
[b]40% soln. in dimethylphthalate.    *)not according to invention.

4

## Example IV

The influence of acid addition on the gelation rate is shown in the following table. Subjected to the hardening was the resin of Example I, the hardening being effected with 3 ml of vanadylacetylacetonate solution (0,1% V), 0,5 ml of acetylacetone, and 1 ml of 50% methylethylketoneperoxide, to 25 g of resin.

The results are shown in Table 4.

TABLE 4

| expt. | acid | acid conc., (g/100 g resin) | gel time, min. | peak time, min. | peak temp. °C |
|---|---|---|---|---|---|
| 13 | — | — | 14 | 17 | 130 |
| 14 | monoethylfumarate | 3.1 | 9 | 12 | 130 |
| 15 | acetic acid | 1.2 | 13 | 16 | 130 |
| 16 | trichloracetic acid | 3.5 | 4 | 7 | 127 |
| 17 | maleic acid | 1.2 | 9 | 11 | 130 |
| 18 | pivalic acid | 1.1 | 13 | 16 | 127 |
| 19 | benzoic acid | 1.3 | 12 | 15 | 130 |
| 20 | oxalic acid. $2H_2O$ | 1.0 | >60 | — | — |

The complex-forming oxalic acid has a retarding effect.

## Example V

An unsaturated polyester was prepared by polycondensation of 108 parts of maleic anhydride, 109 parts of phthalic anhydride, 191 parts of neopentylglycol, and 30 parts of n-decanol. The calculated unsaturation content of the polyester was 275 mmoles per 100 grams; the carboxyl content was 0.37 meq. per 100 g. The polyester was dissolved in vinylversatate-10 in the ratio of 60 parts of polyester to 40 parts of versatate.

Gel times were determined with various enolizable $\beta$-diketones. To this end the following additions were made to 25 g of the resin, in the order given: 1 ml of a solution of vanadylacetylacetonate in dimethylphthalate, which solution contained 0.3% wt. vanadium, 5 mmoles of the diketo compound, and 1 ml of a 50% solution of methylethylketoneperoxide in dimethylphthalate. The results are shown in Table 5.

TABLE 5

| expt. | $\beta$-diketone | gel time, min. | peak time, min. | peak temp., °C |
|---|---|---|---|---|
| 21 | acetylacetone | 7 | 8 | 139 |
| 22 | 2-acetylcyclohexanone | 17 | 20 | 120 |
| 23 | benzoylacetone | 10 | 12 | 132 |

In experiments in which no diketo compound was used no gelation occurred within 12 hours.

## Example VI

An unsaturated polyester was prepared from 138 parts of maleic anhydride, 33 parts of adipic acid, 195 parts of isophthalic acid, and 306 parts of neopentylglycol.

The polyester was dissolved in various vinyl esters, in the ratio of 60 parts of polyester to 40 parts of monomer. The gel time was determined with acetylacetone as co-accelerator, in the manner described in Example V. The results are shown in Table 6.

TABLE 6

| expt. | monomer | gel time, min. | peak time, min. | peak temp., °C |
|---|---|---|---|---|
| 24 | vinylacetate | 16 | 17 | 152 |
| 25 | vinylchloracetate | 11 | 13 | 149 |
| 26 | vinyl-n-butyrate | 14 | 16 | 148 |
| 27 | vinylpivalate | 15 | 17 | 151 |

When no co-accelerator was added, no gelation occurred within 12 hours.

Example VII

An unsaturated polyester was prepared by polycondensation of 205 parts of maleic anhydride, 227 parts of phthalic anhydride, 220 parts of propyleneglycol, and 103 parts of diethyleneglycol.

An amount of 60 parts by weight of polyester was dissolved in 40 parts by weight of vinylacetate or vinylbenzoate.

The gel time was measured in the way described in Example V, with acetylacetone as promoter. Gel time, peak time and peak temperature were, respectively, 17 min., 19 min. and 142°C when vinylacetate was used, and, respectively, 13 min., 14 min. and 130°C when use was made of vinylbenzoate.

Example VIII

An unsaturated polyester was prepared by polycondensation, with addition of 0.7 parts of di-n-butyl-tinoxide, of 108 parts of maleic anhydride, 143 parts of dimethylterephthalate, 181 parts of neopentylglycol, and 61 parts of n-decanol.

The carboxyl content of the polyester was 0.05 meq. per 100 g. An amount of 60 parts by weight of polyester was dissolved in 40 parts by weight of vinylversatate-10. The gel time was measured in the way described in Example V. Gel time, peak time and peak temperature were 5 min., 8 min., and 135°C, resp.

Example IX

The resin of Example I was hardened with various concentrations of accelerator and co-accelerator. The following additions were made to 25 g of the resin, in the order given: x ml of a solution of 0.26 g of vanadylacetylacetonate in 49.74 g of dimethylphthalate, y ml of acetylacetone, and 1 ml of a 50% solution of methylethylketonperoxide in dimethylphthalate.

The results are shown in Table 7.

TABLE 7

| expt. | vanadylacetyl acetonate, ml | acetylacetone, ml | gel time, min. | peak time, min. | peak temp., °C |
|---|---|---|---|---|---|
| 31 | 0,5 | 0,5 | 145 | 150 | 122 |
| 32 | 1 | 0,5 | 62 | 67 | 124 |
| 33 | 2,4 | 0,5 | 17 | 20 | 132 |
| 34 | 3 | 0,5 | 14 | 17 | 130 |
| 35 | 1 | 0,35 | 66 | 69 | 125 |
| 36 | 1 | 0,2 | 75 | 78 | 136 |
| 37 | 1 | 0,1 | 120 | 130 | 125 |

Example X

To 25 g of the resin of Example I the following additions were made, in the order as given: 0.25 ml of a solution of cobaltoctoate in dioctylphthalate, which contained 1% wt. of vanadium, 0.5 ml of acetone, and 1 ml of a 50% wt. solution of methylethylketoneperoxide in dimethylphthalate.

The gel time was 1 minute, the peak time 65 minutes. The peak temperature was 135°C.

Example XI, not according to the invention

Various compounds were examined for their activity as co-promoter in combination with the resin of Example I. To 25 g of the resin the following additions were made, in the order as given: 3 ml of a solution of 0.26 g of vanadylacetylacetonate in 49.74 g of dimethylphthalate, the co-promoter, and 1 ml of methylethylketoneperoxide (50% soln. in dimethylphthalate).

The following compounds were examined as co-promoters (amounts added are given in brackets): dimethylaniline (200 mg), triphenylamine (200 mg), triethylphosphate (1 ml), dimethylformamide (1 ml), 2-nitro-propane (1 ml), triphenylphosphine (200 mg), pyridine (1 ml), ethylenediamine (1 ml), dibutylphosphate (0.5 ml), sodiumbenzenesulphinate (50 mg).

In none of these experiments did gelation occur within 2 hours. Some mixtures showed gelation after a period of 12 hours or more.

Example XII

An unsaturated polyester was prepared by polycondensation of 614 parts of maleic acid anhydride, 232 parts of phthalic acid anhydride and 895 parts of neopentylglycol. 60 parts of the resulting polyester, having an acid number of 21, were dissolved in 40 parts of vinylpivalate. Samples of 25 g of this composition were cold-cured with the aid of curing systems consisting of 1 ml of a 60 wt% solution of methylethyl ketone peroxide in dimethylphthalate, varying amounts of a solution of vanadylacetylacetonate in methylene chloride (0,3 wt% V as element) and a solution of cobaltoctoate in dioctylphtalate (0,25 wt% Co as element), acetylacetone and a carboxylic acid. In addition to the gel-time, peak time and peak temperature the tackiness of the surface, which is an indication of the degree of surface-curing, was determined too. The conditions and results are shown in table 8.

TABLE 8

| expt | V-sol'n ml | Co-sol'n ml | acetylacetone ml | acid grams, type** | gel time min | peak time min | peak temp °C | tackiness* |
|------|------------|-------------|------------------|--------------------|--------------|---------------|--------------|------------|
| 41*** | 0,85 | — | — | — | 2 hours | | | 5 |
| 42 | 0,85 | — | 1 | — | 12 | 14 | 146 | 3 |
| 43 | 0,85 | 0,15 | 1 | — | 22 | 24 | 144 | 1 |
| 44 | 0,85 | 0,15 | 1 | 0,3 TCA | 8 | 11 | 138 | 0 |
| 45 | 0,85 | 0,15 | 1 | 0,7 TCA | 6,5 | 9 | 136 | 1 |
| 46 | 0,50 | 0,50 | 1 | 1,4 TCA | 9,5 | 13 | 130 | 0 |
| 47 | 0,85 | 0,15 | 1 | 1,0 MA | 14 | 17 | 146 | 0 |
| 48 | 0,85 | 0,15 | 0,5 | 0,7 MA | 7 | 11 | 116 | 0 |
| 49 | 0,85 | 0,15 | 0,5 | — | 20 | 22 | 144 | 1 |
| 50 | 0,50 | 0,50 | 0,5 | 1,4 MA | 16 | 19 | 138 | 1 |

*tackiness is graded on a scale of 0 to 5, in which 0=dry, completely cured, 1=slightly tacky 3=thin liquid layer on the surface, 5=no curing at all within an acceptable time span
**TCA=trichloroacetic acid
MA=maleic acid
***not according to the invention.

## Claims

1. Process for the cold hardening of a hardenable composition based on 40 to 70 wt.% of an unsaturated polyester and 30 to 60 wt.% of one or more vinyl monomers copolymerizable therewith, by means of a hardening system consisting of a ketone peroxide, a vanadium compound soluble in the composition to be hardened, and a co-accelerator, this process being characterized in that as monomer at least one vinyl ester is applied, and use is made of a hardening system consisting of a ketoneperoxide, a vanadium compound, and an enolizable $\beta$-diketo compound as co-accelerator.

2. Process according to claim 1, characterized in that the vanadium compound is used in an amount corresponding to 0.01—0.05 mmoles of vanadium per 100 g of polyester and monomer.

3. Process according to claims 1—2, characterized in that the vanadium compound is selected from the group formed by the vanadyl salts of $C_{2-20}$ carboxylic acids and vanadyl complexes with diketo compounds.

4. Process according to claims 1—3, characterized in that the enolizable diketo compound is used in an amount of from 25 to 150 moles per mole of vanadium.

5. Process according to claims 1—4, characterized in that the diketo compound used is acetylacetone.

6. Process according to claims 1—5, characterized in that to the hardenable composition an addition is made of one or more non-complexing saturated or unsaturated carboxylic-acid compounds with 2—20 carbon atoms, in an amount of up to 50 meq. COOH per 100 g of polyester.

7. Process according to claims 1—5, characterized in that a hardening system is used which contains, in addition to the ketone peroxide, the vanadium compound and the $\beta$-diketocompound, also a cobalt compound in an amount of between 5 and 150 wt.% of cobalt (elemental) based on the vanadium (elemental) and a non-complexing $C_{2-20}$ carboxylic acid in an effective amount not exceeding 50 meq COOH per 100 g of polyestercomposition.

8. Process according to claim 7, characterised in that the cobalt compound is used in an amount corresponding to between 15 and 75 wt% of cobalt based on vanadium and the carboxylic acid is used in an amount corresponding to between 0,5 and 10 meq COOH per 100 g of polyester composition.

9. Process according to one or more of claims 6—8, characterised in that the carboxylic acid is maleic acid.

## Patentansprüche

1. Verfahren zum Kalthärten einer härtbaren Zusammensetzung auf der Basis von 40 bis 70 Gew.-% eines ungesättigten Polyesters und 30 bis 60 Gew.-% eines oder mehrerer hiermit copoly-

7

merisierbarer Monomere mittels eines Härtungssystems, welches besteht aus einem Ketonperoxid, einer in der zu härtenden Zusammensetzung löslichen Vanadiumverbindung und einem Mitbeschleuniger, welches Verfahren dadurch gekennzeichnet ist, dass als Monomer mindestens ein Vinylester verwendet wird und dass ein Härtungssystem verwendet wird, welches aus einem Ketonperoxid, einer Vanadiumverbindung und einer enolisierbaren $\beta$-Diketoverbindung als Mitbeschleuniger besteht.

2. Verfahren nach Anspruch 1, dadurch gekennzeichnet, dass die Vanadiumverbindung in einer Menge entsprechend 0,01—0,05 Mol Vanadium je 100 g Polyester und Monomer verwendet wird.

3. Verfahren nach den Ansprüchen 1—2, dadurch gekennzeichnet, dass die Vanadiumverbindung aus der Gruppe der Vanadylsalze der $C_{2-20}$ Carboxylsäuren und Vanadylkomplexe mit Diketoverbindungen ausgewählt wurde.

4. Verfahren nach den Ansprüchen 1—3, dadurch gekennzeichnet, dass die enolisierbare Diketoverbindung in einer Menge von 25 bis 150 Mol je Mol Vanadium verwendet wird.

5. Verfahren nach den Ansprüchen 1—4, dadurch gekennzeichnet, dass es sich bei der Diketoverbindung um Acetylaceton handelt.

6. Verfahren nach den Ansprüchen 1—5, dadurch gekennzeichnet, dass zu der härtbaren Zusammensetzung eine Beimengung aus einer oder mehreren nichtkomplexbildenden, gesättigten oder ungesättigten Carboxylsäureverbindungen mit 2—20 Kohlenstoffatomen hergestellt wird, und zwar in einer Menge bis zu 50 Milliäquivalent COOH je 100 g Polyester.

7. Verfahren nach den Ansprüchen 1—5, dadurch gekennzeichnet, dass ein Härtungssystem verwendet wird, welches zusätzlich zum Ketonperoxid, der Vanadiumverbindung und der $\beta$-Diketoverbindung ausserdem eine Kobaltverbindung in einer Menge von 5 bis 150 Gew.-% (Elementar-)Kobalt auf der Grundlage von (Elementar-)Vanadium und eine nichtkomplexbildende $C_{2-20}$ Carboxylsäure in einer wirksamen Menge von nicht mehr als 50 Milliäquivalent COOH je g Polyester-Zusammensetzung enthält.

8. Verfahren nach Anspruch 7, dadurch gekennzeichnet, dass die Kobaltverbindung in einer Menge entsprechend 15 bis 75 Gew.-% Kobalt auf der Basis von Vanadium verwendet wird und dass die Carboxylsäure in einer Menge entsprechend 0,5 bis 10 Milliäquivalent COOH je 100 g Polyester-Zusammensetzung verwendet wird.

9. Verfahren nach einem oder mehreren der Ansprüche 6—8, dadurch gekennzeichnet, dass es sich bei der Carboxylsäure um Maleinsäure handelt.

**Revendications**

1. Procédé de durcissement à froid d'une composition durcissable à base de 40 à 70% en poids d'un polyester insaturé et de 30 à 60% en poids d'un ou plusieurs monomères vinyliques copolymérisables avec lui, au moyen d'un système durcissant composé d'un peroxyde de cétone, d'un composé de vanadium soluble dans la composition à durcir, et d'un co-accélérateur, ce procédé étant caractérisé en ce qu'on utilise comme monomère au moins un ester vinylique et en ce qu'on utilise un système durcissant composé d'un peroxyde de cétone, d'un composé de vanadium, et d'un composé $\beta$-dicéto énolisable comme co-accélérateur.

2. Procédé selon la revendication 1, caractérisé en ce que le composé de vanadium est utilisé en une quantité correspondant à 0,01—0,05 mole de vanadium pour 100 g de polyester et de monomère.

3. Procédé selon les revendications 1—2, caractérisé en ce que le composé de vanadium est choisi dans le groupe formé par les sels vanadyliques d'acides carboxyliques en $C_2$ à $C_{20}$ et les complexes vanadyliques avec des composés dicéto.

4. Procédé selon les revendications 1—3, caractérisé en ce que le composé dicéto énolisable est utilisé en une quantité allant de 25 à 150 moles per mole de vanadium.

5. Procédé selon les revendications 1—4, caractérisé en ce que le composé dicéto utilisé est l'acétylacétone.

6. Procédé selon les revendications 1—5, caractérisé en ce qu'on ajoute à la composition durcissable un ou plusieurs composés d'acide carboxylique saturés ou insaturés non complexants en $C_2$ à $C_{20}$, en une quantité allant jusqu'à 50 meq. de COOH pour 100 g de polyester.

7. Procédé selon les revendications 1—5, caractérisé en ce qu'on utilise un système durcissant contenant, outre le peroxyde de cétone, le composé de vanadium et le composé $\beta$-dicéto, également un composé de cobalt en une quantité comprise entre 5 et 150% en poids de cobalt (élémentaire) sur la base du vanadium (élémentaire) et un acide carboxylique en $C_2$ à $C_{20}$ non complexant en une quantité effective ne dépassant pas 50 meq de COOH pour 100 g de composition polyester.

8. Procédé selon la revendication 7, caractérisé en ce que le composé de cobalt est utilisé en une quantité correspondant à 15 à 75% en poids de cobalt sur la base du vanadium, et en ce que l'acide carboxylique est utilisé en une quantité correspondant à 0,5 à 10 meq de COOH pour 100 g de composition polyester.

9. Procédé selon une ou plusieurs des revendications 6—8, caractérisé en ce que l'acide carboxylique est l'acide maléique.